# EUROPÄISCHE PATENTSCHRIFT

(11) **EP 1 268 251 B1**
(45) Veröffentlichungstag und Bekanntmachung des Hinweises auf die Patenterteilung: **02.11.2005**
(21) Anmeldenummer: 01925413.5
(22) Anmeldetag: 10.03.2001
(51) Int. Cl.: B60T 17/22, B60T 13/68

(54) **VERFAHREN ZUR ÜBERWACHUNG DER NOTBREMSFÄHIGKEIT EINER ELEKTROHYDRAULISCHEN BREMSANLAGE**
METHOD FOR MONITORING THE EMERGENCY BRAKING CAPABILITY OF AN ELECTROHYDRAULIC BRAKING SYSTEM
PROCEDE POUR SURVEILLER L'APTITUDE AU FREINAGE D'URGENCE D'UN SYSTEME DE FREINAGE ELECTROHYDRAULIQUE

(30) Priorität: 27.03.2000 DE 10015238; 04.12.2000 DE 10060225
(43) Veröffentlichungstag der Anmeldung: 02.01.2003
(73) Patentinhaber: Continental Teves AG & Co. oHG, 60488 Frankfurt (DE)
(72) Erfinder: NIEPELT, Mathias, 61169 Friedberg (DE); FACHINGER, Georg, 65549 Limburg (DE); KLEIN, Andreas, 61352 Bad Homburg (DE)
(86) Internationale Anmeldenummer: PCT/EP2001/002687
(87) Internationale Veröffentlichungsnummer: WO 2001/072568

(56) Entgegenhaltungen:
- EP-A- 1 004 494
- GB-A- 2 317 663
- US-A- 5 979 999

## Beschreibung

Die vorliegende Erfindung bezieht sich auf ein Verfahren zur Überwachung der Funktion und Notbremsfähigkeit einer elektrohydraulischen Bremsanlage (EHB), die einen pedalbetätigten Hauptzylinder und eine Druckquelle mit einer Hydraulikpumpe, mit einem Speicher und mit elektrisch steuerbare Hydraulikventilen enthält, bei welcher der Bremsdruck in den Radbremsen im Normalbetrieb aus der Druckquelle geliefert wird und bei der in einer Notbremsfunktion auf hydraulischen Durchgriff von dem Hauptzylinder zu den Radbremsen umgeschaltet wird. US 5 979 949 A1 beschreibt ein EHB-system nach dem Oberbegriff des Anspruchs 1.

Es besteht zunehmendes Interesse an elektrohydraulischen Bremsanlagen (EHB), bei denen im Normalbetrieb der durch Betätigen eines Bremspedals ausgedrückte Bremswunsch des Fahrers in ein elektrisches Betätigungssignal umgewandelt wird, das mit Hilfe eines elektrisch steuerbaren Hydraulikaggregates zur Einstellung und Regelung des Bremsdruckes in den einzelnen Radbremsen eingesetzt wird. Diese hydraulische Einrichtung enthält eine oder mehrere elektrisch angetriebene Hydraulikpumpen, Speicher und elektrisch steuerbare Hydraulikventile, mit denen radindividuell der Radbremsdruck bemessen wird. Außerdem enthält das Hydraulikaggregat Sensoren zum Messen und Rückmelden des an verschiedenen Stellen des Systems, u.a. in den Radbremsen, am Ausgang des Speichers etc. herrschenden Hydraulikdruckes.

Bremsanlagen dieser Art sind auch bei Ausfall der Elektronik und der Druckquelle notbremsfähig. Um dies zu erreichen, wirkt das Bremspedal auf einen Hauptzylinder, der in einer Notbremsfunktion anstelle der Druckquelle über in der Ruhelage offene, d.h. stromlos auf Durchlass geschaltete Hydraulikventile direkt mit den Radbremsen verbunden wird. Im Prinzip besteht in der Notbremsfunktion kein Unterschied zu einer herkömmlichen, ungeregelten hydraulischen Bremsanlage.

Die hydraulische Abkoppelung des Bremspedals von den Radbremsen im Normalbetrieb hat zur Folge, dass auch die Rückwirkung des Bremsgeschehens auf das Bremspedal unterbrochen ist. Während bei konventionellen hydraulischen Bremsanlagen der Fahrer bei Betätigung des Bremspedals durch Beobachtung des Verhaltens von Pedalweg, Pedalkraft, Fahrzeugverzögerung die Funktionsfähigkeit der Bremsanlage überwacht und dadurch eine Leckage, ein zu großes Lüftspiel oder den Einschluss von Luft in die Hydraulikflüssigkeit oder in die Bremsendurch geänderten Pedalweg oder Pedalgefühl bemerkt, dies bei einer EHB als Folge der Entkoppelung nicht mehr möglich. Der Ausfall dieser Überwachungsfunktion führt dazu, dass manche Fehler nicht mehr oder nicht mehr rechtzeitig erkannt werden können. Dies gilt u.a. für das Erkennen von Lufteinschlüssen in den Radbremsen, die einen erhöhten Druckmittelbedarf während eines Bremsvorganges erfordern, der - im Normalbetrieb - ohne weiteres von der Druckquelle aufgebracht werden kann, nicht jedoch - in der Notbremsfunktion - durch den Hauptzylinder. Es entsteht also ein "schlafender" Fehler, der sich erst bei Ausfall der Betriebsbremse und Rückfall in die Notlaufebene zeigt.

Der vorliegenden Erfindung liegt daher die Aufgabe zugrunde, ein Überwachungsverfahren zu entwickeln, das auch bei intakter Bremsanlage den Verlust der Notbremsfähigkeit, z.B. als Folge von Lufteinschlüssen in den Radbremsen, erkennen lässt.

Es hat sich herausgestellt, dass diese Aufgabe mit dem im Anspruch 1 beschriebenen Verfahren gelöst werden kann, dessen Besonderheit darin besteht, dass bei vorgegebenen Ereignissen, z.B. bei Initialisieren der Bremsanlage, eine Überprüfung der Notbremsfähigkeit durch folgende Schritte durchgeführt wird:
a) Laden des Speichers, ohne Bremsdruckaufbau in den Radbremsen; Messen des Speicherdruckes und/oder des Speichervolumens oder des Speicherfüllstandes;
b) Druckeinsteuerung in die Radbremsen bis zum Erreichen einer vorgegebenen Druckschwelle, bei abgeschalteter oder hydraulisch abgekoppelter Hydraulikpumpe;
c) Messen des Speicherdruckes;
d) Ermitteln und Bewerten der Speicherverhaltens in Reaktion auf die Druckeinsteuerung in die Radbremsen zum Feststellen des aktuellen Volumenbedarfs und/oder des Zustandes der Bremsflüssigkeit, Feststellung von Lufteinschlüssen etc. und zum Beurteilen der aktuellen Notbremsfähigkeit der Bremsanlage.

Die Erfindung beruht also auf der Überlegung, dass "schlafende" Fehler der beschriebenen Art während der Initialisierung der Bremsanlage, also bei jedem Starten des Fahrzeugs, durch Testen der Bremsanlage auf einfache Weise und zuverlässig mit Hilfe des erfindungsgemäßen Verfahrens festgestellt werden können.

In den Unteransprüchen sind noch einige vorteilhafte Ausführungsbeispiele des Verfahrens beschrieben.

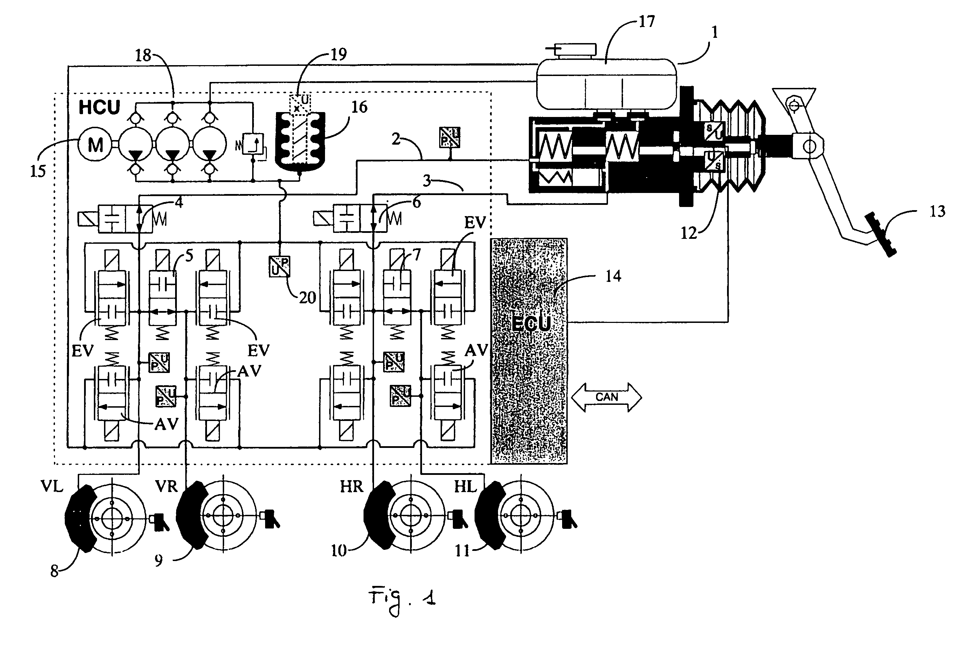

Weitere Einzelheiten, Vorteile und Anwendungsmöglichkeiten der Erfindung gehen aus der folgenden Beschreibung eines Ausführungsbeispiels anhand der beigefügten Abbildung hervor, welche die wesentlichen Komponenten und den hydraulischen Schaltplan einer elektrohydraulischen Bremsanlage (EHB) wiedergibt, die durch das erfindungsgemäße Verfahren überwacht wird.

Die abgebildete Bremsanlage enthält einen pedalbetätigten Tandem-Hauptzylinder 1, an dessen hydraulische Bremskreise 2,3 in gewohnter Weise jeweils zwei Radbremsen VL, VR; HR, HL angeschlossen sind. Die zwischengeschalteten Hydraulikventile 4,5; 6,7 sind in ihrer Ruhelage, die dargestellt ist, auf Durchlass geschaltet. 4,6 sind sog. Trennventile, Die Ventile 5,7 dienen im Normalbetrieb zum Druckausgleich.

Nach Aktivierung der Trennventile 4,6 der dargestellten Bremsanlage sind die Hydraulikwege 2,3, die von dem Tandem-Hauptzylinder 1 zu den Radbremsen führen, unterbrochen, so dass das Bremsgeschehen bzw. der Bremsdruckverlauf in den Radbremsen 8 bis 11 ausschließlich von elektrischen Signalen bestimmt wird, die mit Hilfe eines Wegsensors 12 in Abhängigkeit von der Betätigung des Bremspedals 13 gewonnen werden. Dies ist in der Abbildung symbolisch durch einen Schaltkreis oder ECU 14 dargestellt. ECU 14 erhält und verarbeitet verschiedenartige Eingangssignale; angedeutet sind lediglich der Signalweg von dem Pedalwegsensors 12 zur ECU 14 und ein Datenbus CAN, über den alle übrigen Signale (Radsensorsignale, Drucksensorsignale, Ventilsteuerungssignale etc.) zugeführt und weitergeleitet werden.

Die Bremsanlage enthält einen Druckmittelspeicher 16, hier einen Faltenbalg-Speicher, der in dem dargestellten Ausführungsbeispiel mit einem Wegsensor 19 zur Ermittlung des Speicher-Füllstandes ausgerüstet ist. Zur Messung des Hydraulikdrucks ist am Ausgang des Speichers 16 ein Drucksensor 20 angeschlossen.
Aus der abgebildeten hydraulischen Schaltung ist ohne weiteres ersichtlich, dass durch entsprechende Umschaltung der dargestellten Hydraulikventile Bremsdruck aus der Druckquelle, die im wesentlichen aus einem Speicher 19, einer Pumpe, z.B. elektromotorisch (15) angetriebenen Dreikolbenpumpe 18 und einigen Ventilen besteht, zu den Radbremsen 8 bis 11 geleitet werden kann, wobei der Druck durch entsprechende Ansteuerung der Einlassventile EV dosiert wird. Zum Abbau des Bremsdruckes sind die Auslassventile AV vorgesehen, deren Ausgänge in gewohnter Weise zu einem Druckausgleichsbehälter 17 geführt sind, der wiederum mit der Saugseite der Hydraulikpumpe 18 verbunden ist.

Zur Überwachung der Funktion und Notbremsfähigkeit der dargestellten elektrohydraulischen Bremsanlage (EHB) wird beispielsweise in Verbindung mit jedem Anlassen des Fahrzeugmotors das erfindungsgemäße Verfahren in mehreren Schritten durchgeführt. Hierzu wird nach dem Initialisieren des Fahrzeugs oder der Bremsanlage als erstes der Speicher 16 geladen, wobei zunächst der Druckmittelweg zu den Radbremsen 8 bis 11 noch geschlossen ist. Die Trennventile 4,6 werden ebenfalls angesteuert und dadurch geschlossen.

In einem optionalen Zwischenschritt, der insbesondere auf das Erkennen von Lufteinschlüssen in den Radbremsen zielt, können als nächstes die Radbremsen durch Einsteuerung eines geringen Druckes von ca. 1 bar vorgespannt werden, um die Bremsscheiben anzulegen und das Lüftspiel zu überwinden. Durch anschließendes Messen des Speicherdruckes oder der Füllmenge mit Hilfe der Sensoren 20 oder 19 wird die für diesen Vorgang notwendige Druckmittelverschiebung aus dem Speicher 16 in die Radbremsen 8-11 oder nur in die Radbremsen eines Kreises erfasst.

In einem nächsten Schritt wird nun über die Einlassventile EV Druckmittel bis zu einem Bremsdruckanstieg in den Radbremsen auf z.B. 5 bar eingeleitet. Anschließend wird der Speicherdruck oder die Füllmenge des Speichers 16 erneut gemessen, so dass nunmehr alle Messwerte zum Bilden eines mathematischen Modells des Speicherverhaltens oder der Reaktion auf die Verschiebung des Druckmittels aus dem Speicher 16 in die Radbremsen vorliegen. Die Menge bzw. das Volumen des in den erfindungsgemäßen Testschritten aus dem Speicher 16 in die Radbremsen 8 - 11 verschobenen Druckmittels muss unter einem vorgegebenen Maximalwert liegen, um die Notbremsfähigkeit der Bremsanlage zu sicherzustellen.

Wenn das in den vorgenannten Schritten in die Radbremsen 8 bis 11 verschobene Volumen unter einem vorgegebenen Maximalwert liegt, ist gewährleistet, dass auch im Notfall, d.h. bei abgeschalteter Stromversorgung, wenn ein direkter Durchgriff von dem Hauptzylinder 1 über die geöffneten Trennventile 4,5 und die Ventile 5,7 zu den Radbremsen 8 - 11 hergestellt ist, Druckmittel in ausreichender Menge aus dem Tandem-Hauptzylinder 1 in die Radbremsen 8 bis 11 verschoben werden kann; solange der Maximalwert bei diesem Testvorgang nicht erreicht oder überschritten wird, ist die Notbremsfähigkeit der Bremsanlage sichergestellt.

## Patentansprüche

1. Verfahren zur Überwachung der Funktion und Notbremsfähigkeit einer elektrohydraulischen Bremsanlage (EHB), die einen pedalbetätigten Hauptzylinder und eine Druckquelle mit einer Hydraulikpumpe, mit einem Speicher und mit elektrisch steuerbaren Hydraulikventilen enthält, bei der der Bremsdruck in den Radbremsen im Normalbetrieb aus der Druckquelle geliefert wird und bei der in einer Notbremsfunktion auf hydraulischen Durchgriff von dem Hauptzylinder zu den Radbremsen umgeschaltet wird, **dadurch gekennzeichnet, dass** bei vorgegebenen Ereignissen, z.B. bei jedem Initialisieren der Bremsanlage, eine Überprüfung der Notbremsfähigkeit durch folgende Schritte durchgeführt wird:
a) Laden des Speichers (16), ohne Bremsdruckaufbau in den Radbremsen; Messen des Speicherdruckes und/oder des Speichervolumens oder des Speicherfüllstandes;
b) Druckeinsteuerung in die Radbremsen bis zum Erreichen einer vorgegebenen Druckschwelle, bei abgeschalteter oder hydraulisch abgekoppelter Hydraulikpumpe;
c) Messen des Speicherdruckes;
d) Ermitteln und Bewerten der Speicherverhaltens in Reaktion auf die Druckeinsteuerung in die Radbremsen zum Feststellen des aktuellen Volumenbedarfs und/oder des Zustandes der Bremsflüssigkeit, Feststellung von Lufteinschlüssen etc. und zum Beurteilen der aktuellen Notbremsfähigkeit der Bremsanlage.

2. Verfahren nach Anspruch 1, **dadurch gekennzeichnet, dass** nach dem Laden des Speichers zunächst ein Vorspannen der Radbremsen durch Einsteuerung eines relativ geringen Bremsdruckes in der Größenordnung von 1 bis 2 bar zum Überwinden des Lüftspiels mit anschließender Messung des Speicherdrucks durchgeführt wird.

3. Verfahren nach Anspruch 1 oder 2, **dadurch gekennzeichnet, dass** zur Bewertung der Notbremsfähigkeit aus den Messwerten des Speicherdruckes vor und nach der Bremsdruckeinsteuerung in die Radbremsen über ein mathematisches Modell des Speicherverhaltens auf das vom Speicher abgegebene Volumen geschlossen wird und dass vom Speicher abgegebene Volumen zur Beurteilung der aktuellen Notbremsfähigkeit der Bremsanlage ausgewertet wird.

4. Verfahren nach einem der Ansprüche 1 bis 3, **dadurch gekennzeichnet, dass** das vom Speicher abgegebene Volumen mit einem vorgegebenen Maximalwert verglichen und zur Beurteilung der aktuellen Notbremsfähigkeit der Bremsanlage und/oder des Zustandes der Hydraulikflüssigkeit ausgewertet wird.

5. Verfahren nach einem oder mehreren der Ansprüche 1 bis 4, **dadurch gekennzeichnet, dass** das vom Speicher abgegebene Volumen und/oder der Füllstand des Speichers mit Hilfe eines am Speicher angeordneten Wegsensors ermittelt wird.

## Claims

1. Method for monitoring the function and emergency braking capability of an electro-hydraulic brake system (EHB) which comprises a pedal-operated master cylinder and a pressure source with a hydraulic pump, with an accumulator, and with electrically controllable hydraulic valves, wherein the brake pressure in the wheel brakes is supplied from the pressure source in normal operation, and wherein a switch-over to a hydraulic connection between the master cylinder and the wheel brakes is executed in the event of an emergency braking mode,
**characterized in that** with predetermined events, e.g. during each initialization of the brake system, the emergency braking capability is checked using the following steps:
a) charging of the accumulator (16), without brake pressure buildup in the wheel brakes; measuring the accumulator pressure, and/or the accumulator volume or the filling level of the accumulator;
b) pressure introduction into the wheel brakes until a predetermined pressure threshold is reached, with the hydraulic pump deactivated or hydraulically uncoupled;
c) measuring the accumulator pressure;
d) determining and evaluating the accumulator performance in response to the introduction of pressure into the wheel brakes for finding out the current volume requirement and/or the condition of the brake fluid, for detecting air inclusions, etc., and for judging the current emergency braking capability of the brake system.

2. Method as claimed in claim 1,
**charactized in that** after charging of the accumulator, initially, the wheel brakes are preloaded by introducing a relatively low brake pressure in the magnitude of 1 to 2 bar in order to overcome the clearance with a subsequent measurement of the accumulator pressure.

3. Method as claimed in claim 1 or 2,
**characterized in that** for evaluating the emergency braking capability, the volume output by the accumulator is inferred from the test values of the accumulator pressure before and after the introduction of brake pressure into the wheel brakes by way of a mathematic model of the accumulator performance, and **in that** the volume output by the accumulator is evaluated to judge the current emergency braking capability of the brake system.

4. Method as claimed in any one of claims 1 to 3,
**characterized in that** the volume output by the accumulator is compared with a predetermined maximum value and evaluated to judge the current emergency braking capability of the brake system and/or the condition of the hydraulic fluid.

5. Method as claimed in any one or more of claims 1 to 4,
**characterized in that** the volume output by the accumulator and/or the filling level of the accumulator is determined by means of a travel sensor arranged at the accumulator.

## Revendications

1. Procédé de surveiller la fonction et le freinage de secours d'un système de freinage électrohydraulique (EHB), comportant un maître-cylindre commandé par pédale et une source à pression prévue d'une pompe hydraulique, d'un accumulateur et des soupapes hydrauliques commandées de manière électrique, dans lequel la force de freinage dans les freins de roue, pendant l'opération normale, est délivrée hors de la source à pression, et dans lequel au cas d' une fonction du stop de secours on change au passage hydraulique du maître-cylindre aux freins de roue,
**caractérisé en ce que** dans des situations prédéterminées, par exemple, dans chaque commande de frein, le freinage de secours est contrôlé par des mesures comme suites :
a) charger l'accumulateur (16) sans accroissement de force de freinage dans les freins de roue ; mesurer la pression de l'accumulateur /et ou du volume de l'accumulateur ou du niveau de chargement de l'accumulateur;
b) introduire la pression dans les freins de roue jusqu'à ce qu' un seuil de pression prédéterminé est atteint en déconnectant ou coupant hydrauliquement la pompe hydraulique ;
c) mesurer la pression d'accumulateur ;
d) déterminer et évaluer la tenue d'accumulateur en réponse à l'introduction de pression dans les freins de roue pour déterminer la demande de volume actuelle et/ou l'état du liquide de frein, pour déterminer des bulles d'air etc., et pour évaluer le freinage d'urgence actuel du système de freinage.

2. Procédé selon la revendication 1,
**caractérisé en ce qu'**à partir du chargement de l'accumulateur, en premier lieu, les freins de roue sont précontraints par l'introduction d'une force de freinage relativement basse de l'ordre d'un 1 à 2 bar pour surmonter le jeu, et que la pression de l'accumulateur est mesurée en suite.

3. Procédé selon les revendications 1 ou 2,
**caractérisé en ce que**, pour évaluer le freinage de secours, on peut conclure des valeurs de mesure de la pression de l'accumulateur avant et après l'introduction de la force de freinage aux freins de roue, en volume déchargé par l'accumulateur par l'intermédiaire d'un modèle mathématique, et que le volume déchargé par l'accumulateur est évalué pour juger le freinage de secours actuelle du système de freinage.

4. Procédé selon l'une des revendications 1 à 3,
**caractérisé en ce que** le volume déchargé par l'accumulateur est comparé à une valeur maximum prédéterminée et est évalué pour déterminer le freinage de secours actuel du système de freinage et/ou l'état du liquide hydraulique.

5. Procédé selon l'une ou plusieurs des revendications 1 à 4,
**caractérisé en ce que** le volume déchargé par l'accumulateur et /ou le niveau de chargement de l'accumulateur est déterminé par l'intermédiaire d'un palpeur de déplacement disposé à l'accumulateur.
